# EUROPEAN PATENT APPLICATION

(11) **EP 3 725 858 A1**
(43) Date of publication of application: **21.10.2020**
(21) Application number: 19169554.3
(22) Date of filing: 16.04.2019
(51) Int. Cl.: C09J 7/38

(54) **ADHESIVE SHEET WITH BARRIER AND MANUFACTURING METHOD THEREOF**

(71) Applicant: Smart Co., Ltd, Seoul 07645 (KR)
(72) Inventor: KIM, Sung Je, 03724 Seoul (KR); KIM, Wang Je, 03724 Seoul (KR); LEE, Jung Hey, 12740 Gwangju-si, Gyeonggi-do (KR)
(74) Representative: Viering, Jentschura & Partner mbB Patent- und Rechtsanwälte

(57) **Abstract**

The present disclosure relates to an adhesive sheet with barriers that sequentially includes a base layer, an adhesive layer, a release paper to attach the adhesive layer to an attachment target after the release paper is removed, in which the adhesive layer includes: a first adhesive layer attached to a side of the base layer; and a second adhesive layer attached between the first adhesive layer and the release paper and forming a pattern, and the second adhesive layer maintains adhesion with the attachment target, and a method of manufacturing the adhesive sheet. Therefore, according to the present disclosure, it is possible to solve problems such as weakening of an initial adhesive force and freezing by discharging an air layer or bubbles through passages for discharging bubbles without spraying water to an attachment target and a film when attaching the film. Further, it is possible to easily attach the adhesive sheet.

## Description

### BACKGROUND

### Field

The present disclosure relates to an adhesive sheet with barriers and a method of manufacturing the adhesive sheet and, more particularly, to an adhesive sheet that can preclude inflow of water or air through an air discharge passage by having a collector that can collect air or water when the adhesive sheet is attached, and a method of manufacturing the adhesive sheet.

### Description of the Related Art

Adhesive sheets in the related art have passages on the adhesive surface of the sheets to remove air or water that may be generated in attaching, and a method of easily removing air or water using passages formed by adjusting the surface shape of a surface before processing with silicon on a release paper or a release film such that the shape is transferred to the surface of an adhesive layer in order to form the passages has been used.

However, the adhesive force of the adhesive sheets in the related art gradually decreases as time passes, so there is a problem that passages for discharging air or water cannot their functions due to separation or deformation of the adhesive layer.

Further, the adhesive sheets in the related art have a problem that they easily freeze in winter time at low temperature because water is used in construction work of attaching the adhesive sheets to a target surface.

Further, when the adhesive sheet without a passage for discharging air on an adhesive layer is used, a bubble layer is removed by scratching a film with a pointed tool such as a cutter knife to remove bubble randomly formed when the sheets are attached. However, there is a problem that the scratch widens as time passes and causes a defect in the product.

In order to solve this problem, the adhesive sheets with air discharge passages formed on an adhesive surface of a sheet by a pattern-shaped adhesive layer to discharge air to the outside, that may be generated during attaching while maintaining an adhesive force, are being developed.

However, there is another problem that these air discharge passages of the adhesive sheets remain even after the adhesive sheets are attached, so the period for which the adhesive force of the adhesive sheets is maintained is reduced due to air or water flowing back into the air discharge passages.

There is a related prior art, Korean Patent Application Publication No. 10-2008-0108761 (titled "Interior decoration sheet and method for manufacturing the same", published on October 5, 2011).

### SUMMARY

In order to solve the problems described above, an object of the present disclosure is to provide an adhesive sheet that can preclude inflow of water or air through an air discharge passage by having a collector that can collect air or water when the adhesive sheet is attached, and a method of manufacturing the adhesive sheet.

The object of the present disclosure is not limited to those described above and other objects may be made apparent to those skilled in the art from the following description.

In order to achieve the object of the present disclosure, an adhesive sheet with barriers according to an embodiment of the present disclosure is characterized by sequentially including a base layer, an adhesive layer, a release paper to attach the adhesive layer to an attachment target after the release paper is removed, in which the adhesive layer includes: a first adhesive layer attached to a side of the base layer; and a second adhesive layer attached between the first adhesive layer and the release paper and forming a pattern, and further includes barriers forming a plurality of collectors by being disposed to surround the second adhesive layer.

Further, the second adhesive layer according to an embodiment of the present disclosure is characterized by forming a pattern by being embedded inward from the surface of a side of the first adhesive layer.

Further, in accordance with an embodiment of the present disclosure, it is characterized by forming discharge passages between the second adhesive layer and the attachment target.

Further, the second adhesive layer according to an embodiment of the present disclosure is characterized by forming a pattern by protruding outward from the surface of a side of the first adhesive layer.

Further, in accordance with an embodiment of the present disclosure, it is characterized by forming discharge passages between the second adhesive layers.

Further, the second adhesive layer according to an embodiment of the present disclosure is characterized by changing with lapse of time to increase in adhesive force from the point in time when it is attached to the attachment target.

Further, the first adhesive layer and the second adhesive layer according to an embodiment of the present disclosure are characterized by being made of a material including at least one of an organic material, acryl, silicon, metal silicon, polyester, polyurethane, ethylene co-vinyl acetate (EVA), and polyvinyl acetate (PVAc).

Further, the barriers according to an embodiment of the present disclosure are characterized by being composed of polygonal unit patterns.

Further, the polygonal shape according to an embodiment of the present disclosure is characterized by being a rectangle or a hexagon.

Further, the unit patterns according to an embodiment of the present disclosure are characterized by having a plurality of fine channels connecting the adjacent collectors.

Further, the fine channels according to an embodiment of the present disclosure are characterized by having a width of 10 to 50 µm.

Further, the fine channels according to an embodiment of the present disclosure are characterized by decreasing in width, as they are pressed after the adhesive sheet is attached.

In order to achieve the object of the present disclosure, a method of manufacturing an adhesive sheet with barriers is characterized by including: printing a second adhesive layer forming a pattern on a side of a release paper; printing barriers for forming a plurality of collectors to surround the second adhesive layer on the side of the release paper; feeding a base adhesive sheet including a base layer and a first adhesive layer; and combining the base adhesive sheet and the release paper so as to bond the first adhesive layer, the second adhesive layer, and the barriers.

Further, the combining of the base adhesive sheet and the release paper according to an embodiment of the present disclosure is characterized by combining them such that the second adhesive layer is embedded in the first adhesive layer to form a pattern.

Further, the combining of the base adhesive sheet and the release paper according to an embodiment of the present disclosure is characterized by combining them such that the second adhesive layer protrudes out of the first adhesive layer to form a pattern.

Further, in accordance with an embodiment of the present disclosure, it is characterized by further including forming fine channels at the barriers before feeding the base adhesive sheet.

The details of other embodiments are included in the following detailed description and the accompanying drawings.

Since barriers are formed to surround a second adhesive layer in spaces where discharge passages are formed in the adhesive sheet with barriers, it is possible to prevent deterioration of adhesive ability and reduction of an attachment duration period by preventing air or water from flowing inside from the outside even after the adhesive sheet is attached.

Since a plurality of fine channels connecting adjacent collectors can be formed at unit patterns constituting barriers according to the present disclosure and air constituting bubbles can be uniformly distributed to the plurality of collectors through the fine channels even if bubbles are non-uniformly generated, it is possible to remarkably improve efficiency of keeping, absorbing, and collecting bubbles that may be generated between the adhesive sheet and an attachment target.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a plan view showing an adhesive sheet according to an embodiment of the present disclosure;
FIG. 2 is a plan view showing an adhesive sheet according to another embodiment of the present disclosure;
FIG. 3 is a cross-sectional view of an adhesive sheet according to an embodiment of the present disclosure taken along line a-a' of FIG. 1;
FIG. 4 is a cross-sectional view of an adhesive sheet according to another embodiment of the present disclosure;
FIG. 5 is a plan view showing an adhesive sheet with barriers according to an embodiment of the present disclosure;
FIG. 6 is a cross-sectional view of a first adhesive sheet with barriers according to the present disclosure;
FIG. 7 is a cross-sectional view of a second adhesive sheet with barriers according to the present disclosure;
FIG. 8 is a plan view of an adhesive sheet with barriers having fine channels according to the present disclosure;
FIG. 9 is a cross-sectional view of the first adhesive sheet according to the present disclosure taken along line c-c' of FIG. 8;
FIG. 10 is a cross-sectional view of the second adhesive sheet according to the present disclosure taken along line c-c' of FIG. 8;
FIG. 11 is a cross-sectional view of the first adhesive sheet according to the present disclosure taken along line d-d' of FIG. 8;
FIG. 12 is a cross-sectional view of the second adhesive sheet according to the present disclosure taken along line d-d' of FIG. 8;
FIG. 13 is a plan view showing an adhesive sheet with barriers according to another embodiment of the present disclosure;
FIG. 14 is a plan view of an adhesive sheet with barriers having fine channels according to another embodiment of the present disclosure;
FIG. 15 is a plan view showing an adhesive sheet with barriers according to another embodiment of the present disclosure;
FIG. 16 is a plan view of an adhesive sheet with barriers having fine channels according to another embodiment of the present disclosure; and
FIG. 17 is a process cross-sectional view of an adhesive sheet with barriers according to an embodiment of the present disclosure.

### DETAILED DESCRIPTION OF THE PREFERRED EMBODIMENT

Hereinafter, embodiments of the present disclosure will be described in detail with reference to the accompanying drawings. The embodiments to be introduced below are provided as examples so that the spirit of the present disclosure can be sufficiently communicated to those skilled in the art. Accordingly, the present disclosure is not limited to the embodiments to be described below and may be implemented in other ways.

Parts not related to description were omitted in the drawings to clearly describe the present disclosure and the width, length, thickness, etc. of components may be exaggerated in the drawings for convenience. Like reference numerals indicate the same components throughout the specification.

Hereinafter, an adhesive sheet according to preferred embodiments of the present disclosure and a method of manufacturing the adhesive sheet are described in detail with reference to the accompanying drawings.

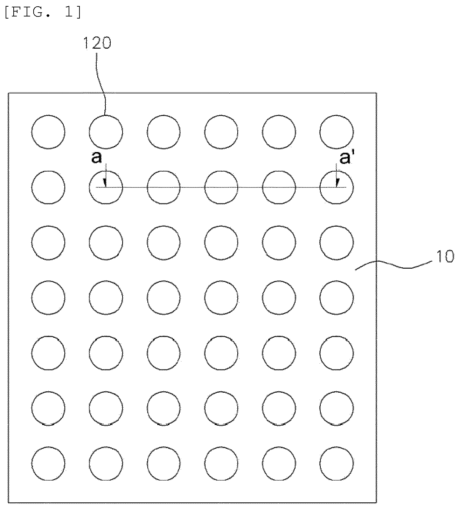

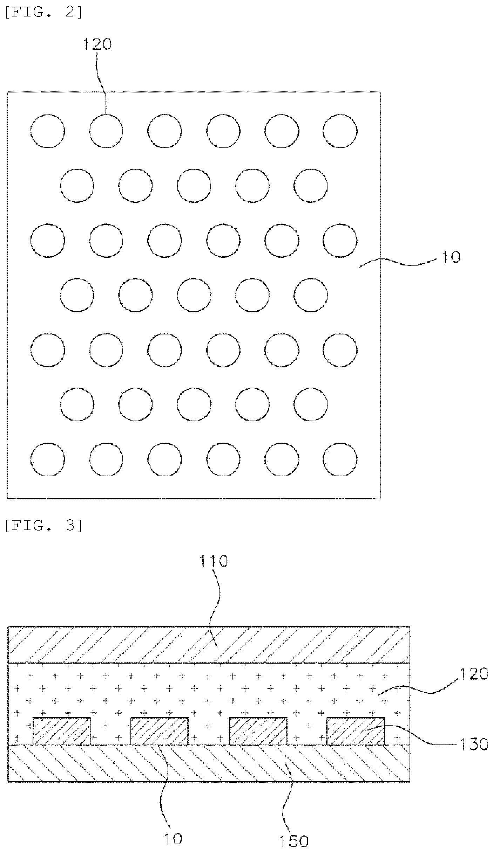

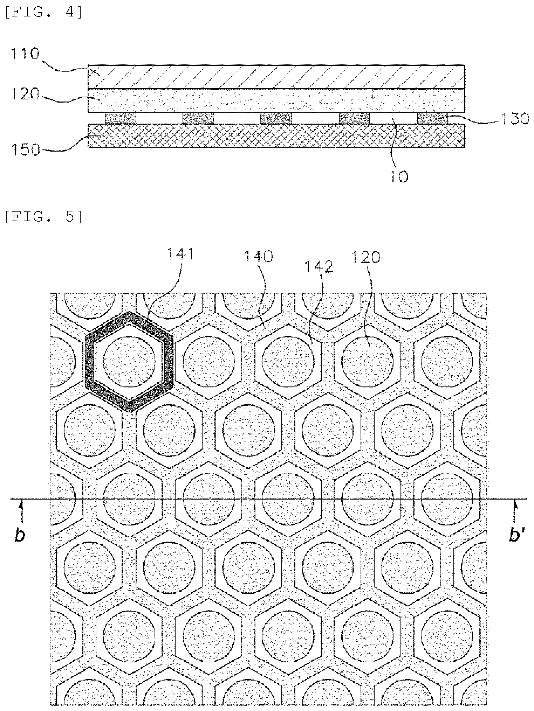

FIG. 1 is a plan view showing an adhesive sheet according to an embodiment of the present disclosure, FIG. 2 is a plan view showing an adhesive sheet according to another embodiment of the present disclosure, FIG. 3 is a cross-sectional view of an adhesive sheet according to an embodiment of the present disclosure taken along line a-a' of FIG. 1, and FIG. 4 is a cross-sectional view of an adhesive sheet according to another embodiment of the present disclosure.

Although the term 'sheet' is used, hereinafter, the term may be used as a meaning including a film and the adhesive sheet also may include or may be replaced with an adhesive film.

An adhesive layer constituting a sheet may be formed such that all the dots are disposed in parallel in all rows and columns, as in FIG. 1, or dots are alternately disposed in rows or columns, as in FIG. 2.

Referring to FIGS. 1 to 4, an adhesive sheet according to an embodiment of the present disclosure sequentially includes a base layer 110, an adhesive layer, a release paper 150, and it is possible to attach the adhesive layer to an attachment target after removing the release paper 150.

The base layer 110, which is a part constituting a base film of the adhesive sheet, may be any one of a color or transparent film type, paper type, or synthetic paper made of at least one material of polyvinylchloride (PVC), polypropylene (PP), polyethylene (PE), polyethyleneterephthalate (PET), polyimide (PI), polyamide (PA), polycarbonate (PC), PS, and OPP.

It is preferable that the base layer 110 has a thickness of 0.1 µm to 5 mm. When the thickness of the base layer 110 is less than 0.1 µm, it may be difficult to secure sufficient strength and rigidity. In contrast, when the thickness of the base layer 110 exceeds 5 mm, there is a problem that strength and rigidity are excessively increased and elongation is correspondingly decreased.

The adhesive layer is attached to a side of the base layer 110. The adhesive layer is attached to a side of the base layer 110, so it has the other side being in contact with the side of the base layer 110 and a side that is opposite to the other side. Further, the adhesive layer may be an adhesive or an adhesive film composed of at least one or more of an organic material, acryl, silicon, polyester, polyurethane, ethylene co-vinyl acetate (EVA), polyvinyl acetate (PVAc), a lava series, and the like.

Hereafter, the term 'adhesive' is used, but it may be used as a meaning including bonding, and the adhesive layer may include or may be replaced with a bonding layer.

It is preferable that the adhesive layer is formed to have a thickness of 0.5 µm to 1 mm. When the thickness of the adhesive layer is less than 0.5 µm, it may be difficult to secure an adhesive force over an appropriate level, and when the thickness of the adhesive layer exceeds 1 mm, an adhesive is too much used, so the hardness of a product may be decreased and a problem may be generated with heat resistance.

The adhesive layer may include a first adhesive layer 120 attached to a side of the base layer 110 and a second adhesive layer 130 attached between the first adhesive layer 120 and the release paper 150 and forming a pattern. The first adhesive layer 120 and the second adhesive layer 130 can maintain adhesive to an attachment target. The first adhesive layer 120 and the second adhesive layer 130 may be made of the same material or different materials.

As shown in FIG. 3, the second adhesive layer 130 according to an embodiment of the present disclosure may form a pattern by being embedded inward from the surface of a side of the first adhesive layer 120.

The pattern may be an adhesive pattern or a printed pattern and it is possible to simultaneously form the printed pattern and discharge passages 10 for discharging air or water on the release paper 150. In detail, when the release paper 150 is removed and then the adhesive layer is attached to an attachment target, the discharge passages 10 for discharging air or water can be formed between the second adhesive layer 130 and the attachment target.

As shown in FIG. 4, the second adhesive layers 130 according to another embodiment of the present disclosure may form a pattern by protruding outward from the surface of a side of the first adhesive layer 120.

The pattern may be an adhesive pattern or a printed pattern and it is possible to simultaneously form the printed pattern and discharge passages 10 for discharging air or water on the release paper 150. In detail, when the release paper 150 is removed and then the adhesive layer is attached to an attachment target, the discharge passages for discharging air or water can be formed between the second adhesive layers 130.

In construction work of attaching an adhesive layer to an attachment target after removing the release paper 150, the base layer 110 may be pressed to discharge air or water. In this case, as the base layer 110 is pressed, the first adhesive layer 120 can be attached to the attachment target through the spaces between the second adhesive layers 130.

The size of the second adhesive layers 130 is a little exaggerated in the drawings to easily describe the structure of the adhesive layer, but the thickness of the second adhesive layer 130 may be understood as being actually smaller than the thickness of the base layer 110 or the first adhesive layer 120.

The first adhesive layer 120 and the second adhesive layers 130 may be made of a material including at least one of an organic material, acryl, silicon, metal silicon, polyester, polyurethane, ethylene co-vinyl acetate (EVA), and polyvinyl acetate (PVAc).

In more detail, the first adhesive layer 120 and the second adhesive layers 130 may be made of at least one of an adhesive, a bonding agent, paint, ink, and a diffusion bead that include the materials described above.

In particular, when the second adhesive layers 130 are made of at least one of paint, ink, and a diffusion bead, the initial adhesive force is small, so it is possible to easily discharge air or water by pressing the adhesive sheet in construction work of attaching the adhesive sheet. However, the latter adhesive force is large, so as time passes, the second adhesive layers 130 and the attachment target keep relatively strong adhesion, so reliability of the adhesive sheet can be secure.

That is, since the second adhesive layers 130 are made of the materials described above, it can change such that the adhesive force increases, as time passes from the point in time when it is attached to an attachment target.

Further, since the discharge passages 10 for discharging air or water are formed simultaneously when the second adhesive layers 130 are attached to a side of the first adhesive layer 120, it is not required to use water in construction work of attaching the sheet, so it is possible to solve the problem of freezing due to using water in winter time at low atmospheric temperature.

The second adhesive layers 130 may have a dot structural shape in which a plurality of circles is spaced and disposed in a matrix shape when seen in a plane.

Meanwhile, when the width of the discharge passages 10 created by the second adhesive layers 130 is less than 0.1 µm, the space is narrow, so it may be difficult to smoothly serve as passages for discharging air or water. In contrast, when the width of the discharge passages 10 exceeds 50 mm, there is a high possibility that the adhesive force of a side of the first adhesive layer 120 is deteriorated due to the design of an excessive area.

The release paper 150 is attached to seal a side of the adhesive layer and the discharge passages 10, thereby being able to protect the first adhesive layer 120, the second adhesive layers 130, and the pattern and discharge passage formed by the second adhesive layers 130.

One or more kinds selected from epoxy-based, epoxy-melamine-based, amino alkyd-based, acrylic-based, melamine-based, silicon-based, fluorine-based, cellulose-based, urea resin-based, polyolefin-based, and paraffin-based materials may be used as the material of the release paper 150.

Further, the release paper 150 may be not only flat, but embossed with a plurality of depressions, prominences, or a combination of depressions and prominences, or may be embossed with at least one or a multiple pattern combination of a plurality of points, lines, dotted lines, circles, and polygons.

It is preferable that the release paper 150 has a thickness of 1 µm to 2 mm. When the thickness of the release paper 150 is too small or large out of the range, it may be difficult to handle the release paper 150.

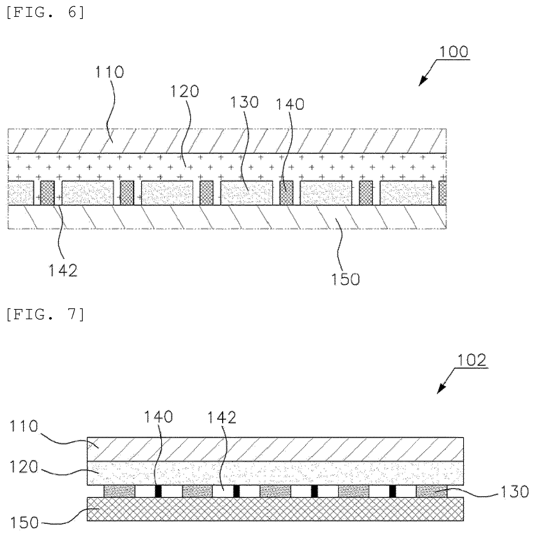

FIG. 5 is a plan view showing an adhesive sheet with barriers according to an embodiment of the present disclosure, FIG. 6 is a cross-sectional view of a first adhesive sheet with barriers according to the present disclosure, and FIG. 7 is a cross-sectional view of a second adhesive sheet with barriers according to the present disclosure.

The fundamental structure of a first adhesive sheet 100 is the same as the adhesive sheet of FIG. 3 except for barriers 140 and the fundamental structure of a second adhesive sheet 102 is the same as the adhesive sheet of FIG. 4 except for the barriers 140.

Referring to FIGS. 5 to 7, the adhesive sheet with the barriers 140 according to an embodiment of the present disclosure is characterized by further including the barriers 140 forming a plurality of collectors 142 by being disposed to surround the second adhesive layers 130 in the structure described above.

Adhesive sheets without the barriers 140 in the related art had a problem that some of discharge passages remain even after air is discharged through the discharge passages when the adhesive sheets are attached, so air or water flows back inside from the outside, thereby deteriorating the adhesive ability and reducing adhesion duration period.

However, in the adhesive sheet with the barriers 140 according to the present disclosure, since the barriers 140 are formed to surround the second adhesive layers 130 in a space where the discharge passages 10 are formed, it is possible to prevent deterioration of adhesive ability and reduction of adhesion duration period by preventing air or water from flowing inside from the outside even after the adhesive sheet is attached.

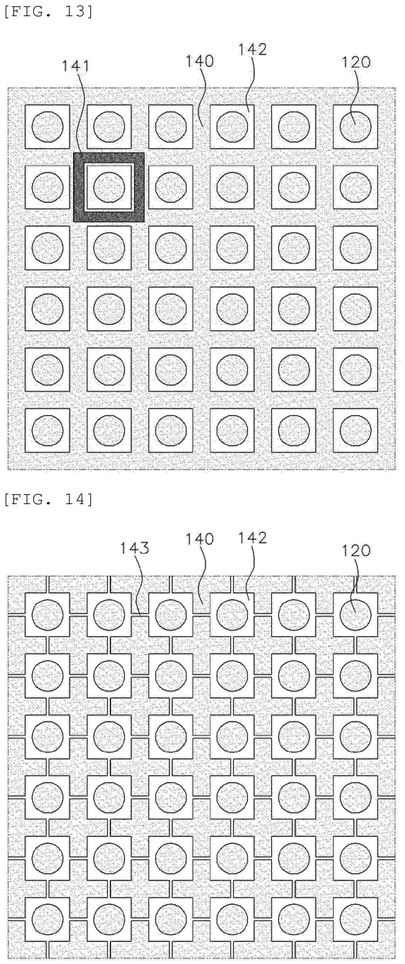

The barriers 140 may be composed of polygonal unit patterns 141 for durability and the convenience of manufacturing, and may be rectangles, as shown in FIG. 5, or may be hexagons, as shown in FIG. 13. However, they are not limited to these polygonal shapes and may include all structures that form collectors 142 by being spaced with a predetermined gap from the second adhesive layers 130 to form a pattern.

Further, the collector 142 formed by the barriers 140 may provide spaces for collecting air or water.

In general, in construction work of removing the release paper 150 and then attaching the adhesive sheet to an attachment target, a small amount of bubbles may be generated between the adhesive sheet and the attachment target even though a skilled worker performs the construction work. However, the collectors 142 according to the present disclosure perform a function of keeping, absorbing, and collecting these bubbles, thereby being able to perform a shock-absorbing function that precludes the adhesive sheet from being non-uniformly attached to the attachment target due to the bubbles.

That is, most bubbles can go out through the discharge passages 10 and even some of the bubble that are not discharged are collected by the collector 142 according to the present disclosure, so it is possible to prevent a bubble layer from being formed between the adhesive sheet and the attachment target.

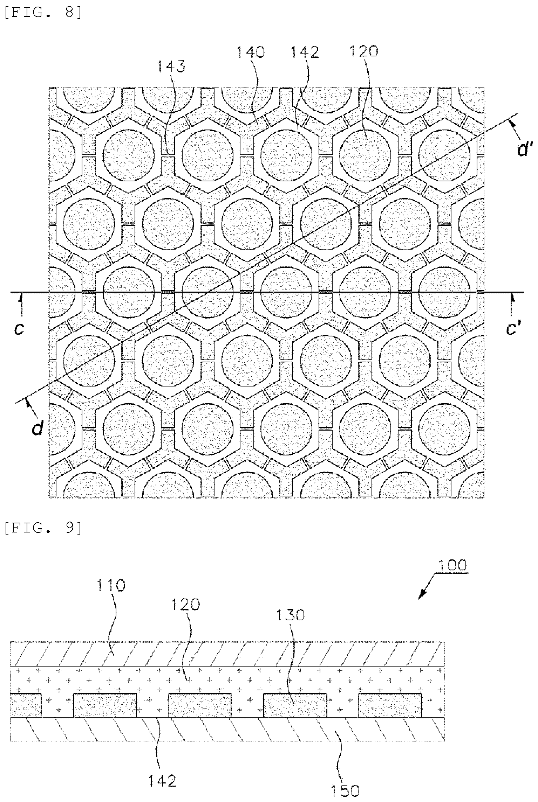

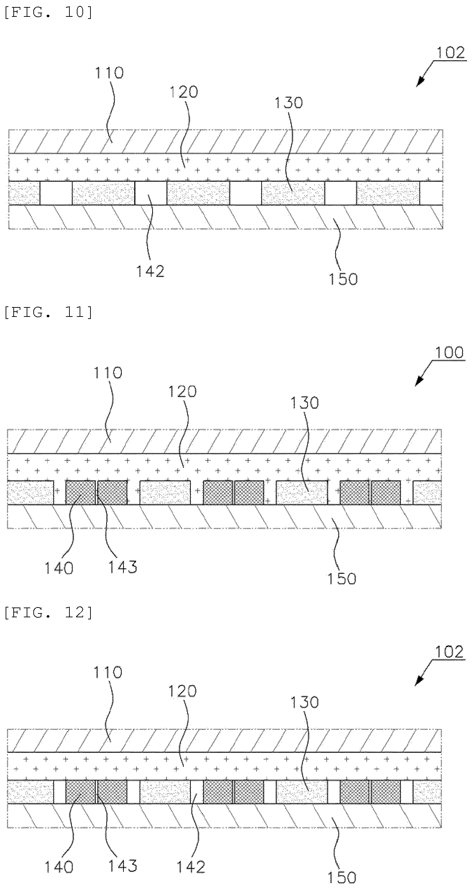

FIG. 8 is a plan view of an adhesive sheet with barriers having fine channels according to the present disclosure, FIG. 9 is a cross-sectional view of the first adhesive sheet according to the present disclosure taken along line c-c' of FIG. 8, FIG. 10 is a cross-sectional view of the second adhesive sheet according to the present disclosure taken along line c-c' of FIG. 8, FIG. 11 is a cross-sectional view of the first adhesive sheet according to the present disclosure taken along line d-d' of FIG. 8, and FIG. 12 is a cross-sectional view of the second adhesive sheet according to the present disclosure taken along line d-d' of FIG. 8.

Referring to FIGS. 8 to 12, a plurality of fine channels 143 connecting adjacent collectors 142 may be formed at unit patterns 141 constituting barriers 140 according to the present disclosure.

As described above, the collectors 142 can keep, absorb, and collect bubbles that may be generated between the adhesive sheet and an attachment target during attachment, and generally, the internal volumes of the collectors 142 are uniform, but the positions where bubbles are generated are somewhat not uniform.

A plurality of fine channels 143 connecting adjacent collectors 142 may be formed at the unit patterns 141, and even if bubbles are non-uniformly generated, air constituting the bubbles can be uniformly distributed to the plurality of collectors 142 through the fine channels 143. Therefore, it is possible to considerably improve the efficiency of keeping, absorbing, collecting bubbles that may be generated between the adhesive sheet and an attachment target.

Further, the fine channels 143 can be removed after time passes, because their widths are reduced when they are pressed after the adhesive sheet is attached.

That is, the fine channels 143 function as air passages through which bubbles can be uniformly distributed to the plurality of collectors 142 when the adhesive sheet is attached, but their width is gradually decreased due to a change with lapse of time or pressing after the adhesive sheet is attached. Accordingly, it is possible to prevent air or water from flowing inside through the fine channels 143 from the outside.

The width of the fine channels 143 may be 10 ∼ 50 µm, preferably, 10 to 30 µm. When the width of the fine channels 143 is less than 10 µm, it is not enough to perform the function of passages through which the air constituting bubbles can move. Further, when width of the fine channels 143 exceeds 30 µm, the fine channels 143 are difficult to be removed even time passes after the adhesive sheet is attached. Accordingly, it is preferable to satisfy the range.

FIG. 13 is a plan view showing an adhesive sheet with barriers according to another embodiment of the present disclosure and FIG. 14 is a plan view of an adhesive sheet with barriers having fine channels according to another embodiment of the present disclosure.

As described above, the barriers 140 may be composed of the polygonal unit patterns 141 and may be formed in a hexagonal shape, as shown in FIG. 5, or in a rectangular shape, as shown in FIG. 13, but these shapes are examples and the barriers 140 are not limited thereto.

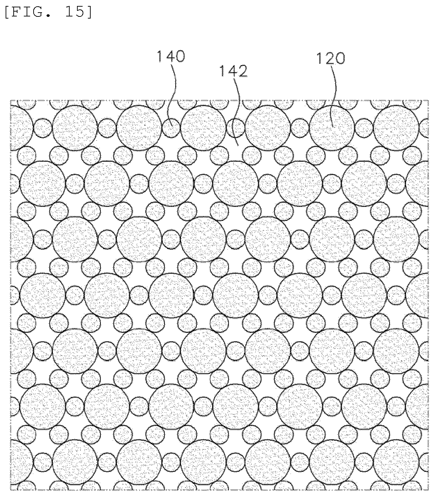

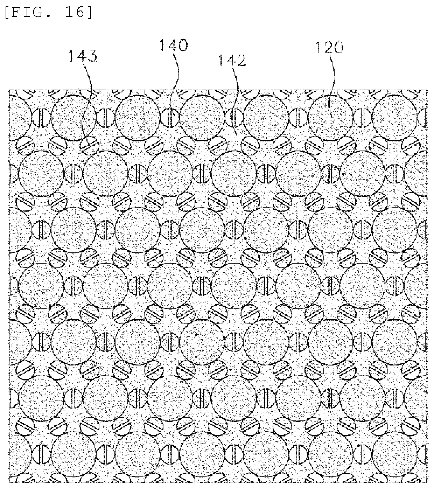

FIG. 15 is a plan view showing an adhesive sheet with barriers according to another embodiment of the present disclosure and FIG. 16 is a plan view of an adhesive sheet with barriers having fine channels according to another embodiment of the present disclosure.

Referring to FIGS. 15 and 16, the barriers 140 are characterized in that it is formed in point patterns between a plurality of second adhesive layers 130, thereby forming collectors 142. Further, the fine channels 143 connecting adjacent collectors 142 may be formed.

Although the point patterns are each shown as a circle, they are not limited thereto and may include various shapes for forming elliptical or rectangular collectors 142.

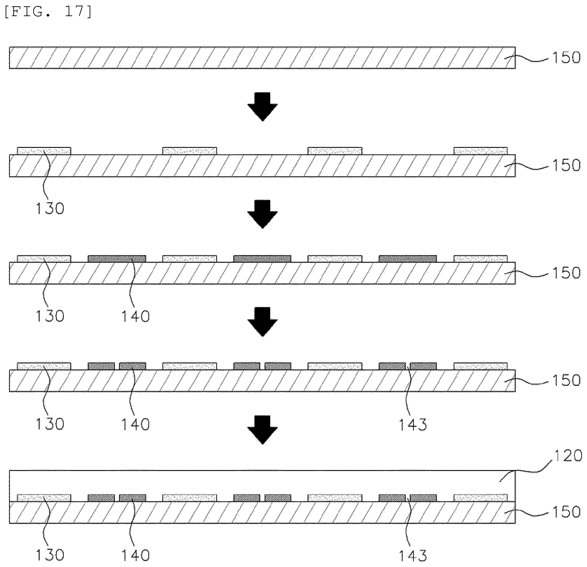

FIG. 17 is a process cross-sectional view of an adhesive sheet with a barrier according to an embodiment of the present disclosure.

Referring to FIG. 17, the release paper 150 is fed first through a first roller to manufacture the adhesive sheet with the barriers 140 according to an embodiment of the present disclosure.

The fed release paper 150 passes through a second roller, and in this process, a pattern can be formed by attaching the second adhesive layer 130 to a side of the release paper 150 by an adhesive layer forming device, and this attachment can be performed by printing.

It is preferable to perform the printing in any one method of gravure printing, offset printing, silk screen printing, digital printing, and transfer printing. The transfer printing is classified into pressure transferring and thermal transferring. The thermal transferring is a method that attaches a foil with specific symbols or characters engraved thereon to the release paper 150 and then transfers the symbols or characters using heat, or heat or an optical wavelength provided from UV or IR light.

Next, the release paper 150 printed with the second adhesive layers 130 passes through a third roller, whereby the barriers 140 forming the plurality of collectors 142 to surround the second adhesive layers 130 can be printed.

The release paper 150 printed with even the barriers 140 passes through a fourth roller, and in this process, the release paper 150 is removed, so a base adhesive sheet including the base layer 110 and the first adhesive layer 120 can be fed by a fifth roller.

In this case, it is possible to form the fine channels 143 at the barriers 140 using a copperplate having a pattern before feeding the base adhesive sheet.

Next, the base adhesive sheet and the release paper 150 are combined to bond the first adhesive layer 120, the second adhesive layers 130, and the barriers 140, thereby being able to manufacture an adhesive sheet. The manufactured adhesive sheet can be discharged by a sixth roller.

When the base adhesive sheet and the release paper 150 are combined, they are combined such that the second adhesive layers 130 protrude out of the first adhesive layer 120 to form a pattern, thereby being able to manufacture the second adhesive sheet 102 shown in FIG. 12. However, it may also possible to manufacture the first adhesive sheet 100 shown in FIG. 11 by combining them such that the second adhesive layers 130 are embedded in the first adhesive layer 120 to form a pattern.

Optimal embodiments were disclosed in the drawings and the specification, as described above. Although specific terms were used, there are used only to describe the present disclosure, not to limit meanings or the scope of the present disclosure described in claims. Accordingly, those skilled in the art would understand that various and equivalent modifications can be achieved from the embodiments. Therefore, the technical protective region of the present disclosure should be determined by the scope described in claims.

## Claims

1. An adhesive sheet with barriers, sequentially comprising a base layer, an adhesive layer, a release paper to attach the adhesive layer to an attachment target after the release paper is removed,
wherein the adhesive layer includes:
a first adhesive layer attached to a side of the base layer; and
a second adhesive layer attached between the first adhesive layer and the release paper and forming a pattern, and
and further includes barriers forming a plurality of collectors by being disposed to surround the second adhesive layer, and composed of unit patterns,
wherein the collectors prevent the adhesive sheet from being non-uniformly attached to the attachment target by collecting bubbles.

2. The adhesive sheet of claim 1, wherein the first adhesive layer and the second adhesive layer are made of a material including at least one of acryl, polyester, polyurethane, ethylene co-vinyl acetate (EVA), and polyvinyl acetate (PVAc).

3. The adhesive sheet of claim 1, wherein the unit patterns are rectangles or hexagons.

4. The adhesive sheet of claim 1, wherein the unit patterns further include a plurality of fine channels that connects the adjacent collectors and functions as passages through which air or water moves, and
the bubbles can be distributed to the collectors through the fine channels.

5. The adhesive sheet of claim 4, wherein as the adhesive sheet is pressed after attached, the width of the fine channels decreases and the fine channels are removed, so air or water is prevented from flowing inside through the fine channels from the outside.

6. A method of manufacturing an adhesive sheet with barriers, the method comprising:
printing a second adhesive layer forming a pattern on a side of a release paper;
printing barriers that are composed of unit patterns and form a plurality of collectors to surround the second adhesive layer on the side of the release paper;
feeding a base adhesive sheet including a base layer and a first adhesive layer; and
combining the base adhesive sheet and the release paper to bond the first adhesive layer, the second adhesive layer, and the barriers,
wherein the collectors prevent the adhesive sheet from being non-uniformly attached to an attachment target by collecting bubbles.

7. The method of claim 6, further comprising forming a plurality of fine channels at the barriers before feeding the base adhesive sheet.

8. The method of claim 7, wherein the unit patterns further include the plurality of fine channels that connects the adjacent collectors and functions as passages through which air or water moves, and
the bubbles can be distributed to the collectors through the fine channels.

9. The method of claim 8, wherein as the adhesive sheet is pressed after attached, the width of the fine channels decreases and the fine channels are removed, so air or water is prevented from flowing inside through the fine channels from the outside.
